# DEMANDE DE BREVET EUROPEEN

(11) **EP 2 154 605 A1**
(43) Date de publication de la demande: **17.02.2010**
(21) Numéro de dépôt: 08161966.0
(22) Date de dépôt: 07.08.2008
(51) Int. Cl.: G06F 9/40, G06F 9/45

(54) **Méthode de traitement d'une sous-routine par un microprocesseur**

(71) Demandeur: Nagravision S.A., 1033 Cheseaux-sur-Lausanne (CH)
(72) Inventeur: Osen, Karl, 1282, Dardagny (CH)
(74) Mandataire: Leman Consulting S.A.

(57) **Abrégé**

Le but de la présente invention est de proposer une méthode de traitement d'une sous-routine permettant d'optimiser le code programme précédant son appel.

Ce but est atteint par une méthode de traitement d'une sous-routine depuis un programme principal par un microprocesseur, comprenant une mémoire de pile et un compteur de programme comprenant les étapes suivantes :
- à une première valeur de compteur de programme dans le programme principal, exécution d'une instruction d'appel à une sous-routine et mise à jour du compteur de programme pour une adresse de retour correspondant à l'instruction suivante dudit programme principal,
- sauvegarde de l'adresse de retour dans la mémoire de pile, et chargement de l'adresse de la sous-routine dans le compteur de programme,
- lecture et utilisation par la sous-routine d'au moins un paramètre localisé immédiatement après l'instruction de l'appel à la sous-routine,
- modification de l'adresse de retour dans la pile selon la taille du paramètre,
- retour de la sous-routine en utilisant l'adresse de retour modifiée.

## Description

### Introduction

La présente invention concerne le domaine de l'environnement d'exécution de microprocesseur, en particulier lors d'utilisation pour des applications de sécurité.

### Etat de la technique

La structure d'un microprocesseur est bien connue et comprend une unité centrale d'exécution (ALU) qui lit des instructions stockées dans une mémoire, et un compteur de programme. Le contenu de la mémoire représente le programme à effectuer et les instructions sont interprétées pas à pas par l'unité centrale.

En plus de toutes les instructions de manipulation de données (lecture, écriture, opération booléenne etc.), des instructions de modification du compteur de programme sont également proposées.

Ces instructions permettent des sauts à une adresse spécifique ou relative, que ce soit des sauts inconditionnels ou conditionnels.

Une autre catégorie d'instructions est l'appel à une sous-routine. Une sous-routine est un ensemble d'instructions qui est appelé depuis une adresse d'origine qui est sauvé dans une pile. Une fois l'exécution de la sous-routine terminée, le compteur de programme est restauré à l'adresse initiale contenue dans la pile avec un offset suffisant pour que l'exécution du programme se poursuive juste après l'appel à la sous-routine.

Lorsque l'on souhaite utiliser des variables dans une sous-routine, on définit dans la sous-routine quel(s) registre(s) va être utilisé comme paramètre d'entrée (par exemple R0) et quel(s) registre(s) sera utilisé comme paramètre de sortie (par exemple R1). Le même registre peut faire office de paramètre d'entrée et de sortie.

On va donc initialiser le registre R0 par la donnée que l'on souhaite utiliser comme entrée (ex. MOV #12 -> R0). L'appel à la sous-routine provoque la sauvegarde du compteur de programme PC dans la pile (stack pointer) avec un offset permettant de poursuivre le déroulement une fois l'adresse de la pile restaurée. Cet offset correspond au nombre de bytes nécessaire pour définir l'appel à une sous-routine.

Dans la sous-routine, on va utiliser le contenu du registre R0 pour calculer le résultat qui sera stocké dans R1 selon la définition de cette sous-routine.

Cette sous-routine se termine par une instruction spécifique de fin (RET, RTN etc.) qui a pour objet de reprendre l'adresse dans la pile pour la charger dans le compteur de programme. Ceci a pour conséquence que le programme continue juste après la position de l'appel à la sous-routine.

Ainsi avant chaque appel à une sous-routine, on trouvera des opérations de chargement de plusieurs registres qui seront utilisés dans la sous-routine. Inversement, après l'exécution, le résultat de la sous-routine est généralement stocké dans des registres et le contenu de ces registres est copié à la place mémoire souhaitée.

Ainsi le gain de place programme qu'une sous-routine permet d'obtenir est réduit par les déplacements de données préalables à l'appel de cette sous-routine.

### Brève description de l'invention

Le but de la présente invention est de proposer une méthode de traitement d'une sous-routine depuis un programme principal par un microprocesseur, comprenant une mémoire de pile et un compteur de programme comprenant les étapes suivantes :
- à une première valeur de compteur de programme dans le programme principal, exécution d'une instruction d'appel à une sous-routine et mise à jour du compteur de programme pour une adresse de retour correspondant à l'instruction suivante dudit programme principal,
- sauvegarde de l'adresse de retour dans la mémoire de pile, et chargement de l'adresse de la sous-routine dans le compteur de programme,
- lecture et utilisation par la sous-routine d'au moins un paramètre localisé immédiatement après l'instruction de l'appel à la sous-routine,
- modification de l'adresse de retour dans la pile selon la taille du paramètre,
- retour de la sous-routine en utilisant l'adresse de retour modifiée.

### Brève description des figures

L'invention sera mieux comprise grâce à la description détaillée qui va suivre et qui se réfère aux dessins annexés qui sont donnés à titre d'exemples nullement limitatifs, à savoir:
- la figure 1 illustre l'appel à une sous-routine en utilisant des constantes, selon l'art antérieur;
- la figure 2 illustre l'appel à une sous-routine en utilisant des variables, selon l'art antérieur;
- la figure 3 illustre une sous-routine standard;
- la figure 4 illustre l'appel à une sous-routine en utilisant des constantes, selon l'invention;
- la figure 5 illustre l'appel à une sous-routine en utilisant des variables, selon l'invention;
- la figure 6 illustre l'exécution d'une sous-routine selon l'invention; et
- la figure 7 illustre l'appel à une sous-routine avec transmission de la taille des paramètres.

### Description détaillée

Selon le concept de l'invention, il n'est plus nécessaire de charger des registres particuliers pour initialiser l'environnement de la sous-routine.

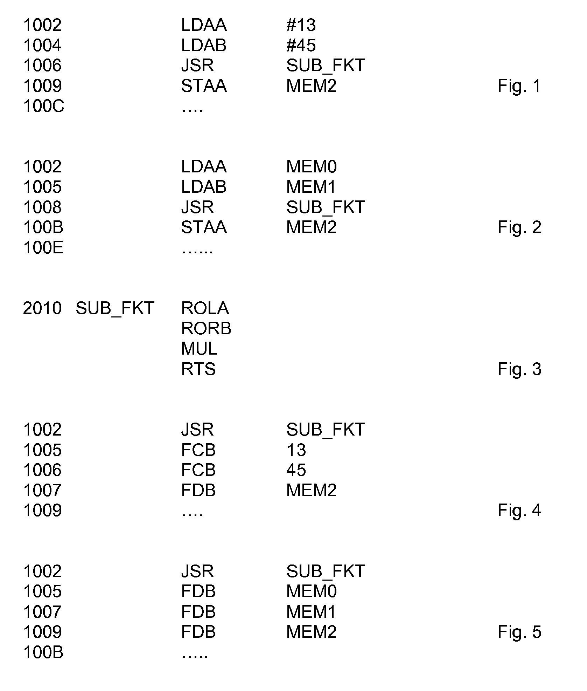

Sur la figure 1, on trouve un appel classique à une sous-routine SUB_FKT qui utilise les registres A et B comme paramètres d'entrée et A comme paramètre de sortie.

Les exemples qui vont suivre sont basés sur un microprocesseur Motorola de type 68HC11.

Dans le cas illustré par la figure 1, des constantes (ici 13 et 45) sont chargées dans les registres A (LDAA = chargement d'une valeur dans le registre A) et B (LDAB = chargement d'une valeur dans le registre B). Au retour de la sous-routine, le registre A contient le résultat qui est ensuite stocké dans la position mémoire identifiée par MEM2. L'ensemble de ces pas de programme utilise 10 bytes de programme.

Dans le cas illustré à la figure 2, le contenu des mémoires MEM0 et MEM1 est chargé dans les registres A et B. Au retour de la sous-routine, le registre A contient le résultat qui est ensuite stocké dans la position mémoire identifiée par MEM2. L'ensemble de ces pas de programme utilise 12 bytes de mémoire.

La figure 3 illustre un exemple d'une sous-routine dans laquelle une rotation à gauche est effectuée sur le registre A et une rotation à droite est exécutée sur le registre B. Les valeurs de ces deux registres sont ensuite multipliées entre elles, le résultat étant stocké dans les deux registres A et B, A recevant la partie la moins significative qui est considérée comme la valeur de sortie de la sous-routine. L'instruction RTS permet la fin de la sous-routine et le retour à une adresse juste après l'appel de la sous-routine.

Lors de l'appel d'une sous-routine, certaines opérations automatiques se déroulent, en particulier la manipulation du compteur de programme PC. En effet, du fait que la fin de la sous-routine provoque un retour à l'adresse suivant l'appel de ladite sous-routine, une mémoire additionnelle appelée "pile" ou "stack" (SP) en anglais va conserver l'adresse du compteur de programme.

Au moment de l'appel à une sous-routine, le compteur de programme PC pointe sur l'instruction suivant juste l'instruction d'appel à la sous-routine. Dans l'exemple de la figure 1, le PC aura donc une valeur qui pointe sur l'adresse 1009 après avoir lu l'instruction précédente.

Cette instruction d'appel à la sous-routine provoque le chargement de l'adresse du PC dans la pile (PC -> SP) et l'adresse de la sous-routine (ici 2010) est chargée dans le compteur de programme.

Lors de la fin de la sous-routine (RTS), le contenu de la pile est chargé dans le compteur de programme pour que le déroulement puisse suivre son cours.

La figure 4 illustre le déroulement du programme principal selon l'invention. Aucune préparation n'est nécessaire avant l'appel de la sous-routine, les paramètres sont placés après l'appel de la sous-routine. On place les constantes 13 et 45 juste après l'appel ainsi que l'adresse devant recevoir la réponse. On le voit ici, les paramètres placés après l'appel de la sous-routine peuvent soit servir comme données d'entrée, soit comme données de sortie ou les deux à la fois.

On le voit, il ne faut que 7 bytes pour la même configuration que l'exemple de la figure 1.

La figure 5 indique une variante dans laquelle des paramètres sous forme de position mémoire sont transmis à la sous-routine.

Il est certain que le format des paramètres placés après l'appel de la sous-routine peut être de différentes natures. Une première valeur indique le début d'une chaîne de caractères et un seconde valeur indique la longueur de la chaîne par exemple.

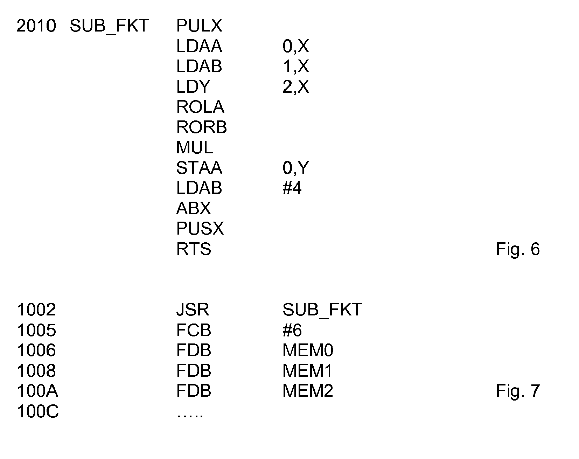

La figure 6 montre comment une telle sous-routine va réagir face à ce nouveau fonctionnement. Il est important de noter que la taille des paramètres qui suit doit lui être connue sinon elle ne saurait rétablir l'adresse de retour correctement.

Dans un premier temps, l'information de la pile est utilisé pour trouver les valeurs qui sont placées après l'appel. Le contenu de la pile est lu et utilisé pour déterminer l'adresse du ou des paramètres qui sont transmis à la sous-routine.

Avec l'exemple de la figure 6, la valeur de la pile est reprise dans le registre X et donc correspond à l'adresse des données qui sont placées juste après l'appel de la sous-routine.

Une fois le traitement de la sous-routine terminé, l'adresse de retour au programme principal doit être calculée en tenant compte des paramètres qui ont été placés après l'appel. La sous-routine connaît la longueur totale des paramètres (exemple de la figure 6 avec l'ajout d'une valeur 4 à l'adresse initiale contenue dans la pile).

Comme indiqué plus haut, les paramètres de la sous-routine peuvent être utilisés pour l'entrée et/ou la sortie. Ainsi sur l'exemple des figures 4 et 5, le paramètre MEM2 est placé après l'appel et est utilisé pour stocker la valeur résultante de la sous-routine directement dans la sous-routine et non plus dans le programme principal.

Les paramètres placés dans le programme principal sous l'appel à la sous-routine peuvent être de formes diverses comme des constantes (figure 4), des variables (figure 5) ou des pointeurs vers d'autres données ou même l'adresse d'une autre sous-routine.

Selon une variante de l'invention illustrée par la figure 7, la place occupée dans le programme (la taille) des paramètres n'est pas connue par la sous-routine, mais constitue le premier paramètre placé après l'appel de la sous-routine dans le programme principal. Dans cet exemple, les variables MEM0 à MEM2 ont une taille de 6 bytes et c'est donc cette valeur qui est placée juste après l'appel (on pourrait également placer ici la valeur 7 pour tenir compte du paramètre de longueur qui prend un byte supplémentaire ). Il serait possible pour afficher un nom, d'indiquer comme premier paramètre la longueur du nom et ensuite les caractères du nom.

Dans le cas d'un design spécifique d'un microprocesseur, il est possible de développer une architecture dans laquelle on prévoit un appel à une sous-routine particulière implémentant automatiquement ces opérations.

La solution de la figure 7 se prête particulièrement à cet effet car un appel à une sous-routine modifiée pourrait lire la taille des données et mettre à jour automatiquement l'adresse de retour compte tenu de la taille des données entre l'appel de la sous-routine et la suite du programme principal.

Au lieu d'implémenter la manipulation de la pile lors de l'entrée dans la sous-routine, ceci peut se faire lors de la sortie de la sous-routine avec une instruction de sortie particulière.

Dans le cas de l'utilisation de programmation virtuelle telle que Java, il est possible de définir une instruction particulière qui va exécuter les étapes spécifiques à l'invention, à savoir la modification de l'adresse de retour en fonction de la taille des données placées dans le programme principal.

## Revendications

1. Méthode de traitement d'une sous-routine depuis un programme principal par un microprocesseur, comprenant une mémoire de pile et un compteur de programme comprenant les étapes suivantes :
- à une première valeur de compteur de programme dans le programme principal, exécution d'une instruction d'appel à une sous-routine et mise à jour du compteur de programme pour une adresse de retour correspondant à l'instruction suivante dudit programme principal,
- sauvegarde de l'adresse de retour dans la mémoire de pile, et chargement de l'adresse de la sous-routine dans le compteur de programme,
- lecture et utilisation par la sous-routine d'au moins un paramètre localisé immédiatement après l'instruction de l'appel à la sous-routine,
- modification de l'adresse de retour dans la pile selon la taille du paramètre,
- retour de la sous-routine en utilisant l'adresse de retour modifiée.

2. Méthode selon la revendication 1, **caractérisée en ce qu'**au moins un paramètre est utilisé comme donnée d'entrée de la sous-routine.

3. Méthode selon la revendication 1 ou 2, **caractérisée en ce qu'**au moins un paramètre est utilisé comme donnée de sortie de la sous-routine.

4. Méthode selon l'une des revendications 1 à 3, **caractérisée en ce qu'**au moins un paramètre est utilisé pour indiquer la taille dudit paramètre.

5. Méthode selon l'une des revendications 1 à 4, **caractérisée en ce que** le microprocesseur contient une instruction complexe d'appel à une sous-routine comprenant la modification de l'adresse de retour dans la pile selon la taille du paramètre.

6. Méthode selon l'une des revendications 1 à 4, **caractérisée en ce que** l'environnement d'exécution du microprocesseur comprend une machine virtuelle, et **en ce que** le langage virtuel comprend une instruction complexe d'appel à une sous-routine comprenant la modification de l'adresse de retour dans la pile selon la taille du paramètre.
